# EUROPÄISCHE PATENTSCHRIFT

(11) **EP 0 360 909 B1**
(45) Veröffentlichungstag und Bekanntmachung des Hinweises auf die Patenterteilung: **14.12.1994**
(21) Anmeldenummer: 88116224.2
(22) Anmeldetag: 30.09.1988
(51) Int. Cl.: G09B 19/04, G09B 19/06

(54) **Sprachübungsgerät**
Speech practising apparatus
Appareil d'exercise de la parole

(43) Veröffentlichungstag der Anmeldung: 04.04.1990
(73) Patentinhaber: Siemens Audiologische Technik GmbH, 91058 Erlangen (DE)
(72) Erfinder: Liebscher, Jost, D-8550 Forchheim (DE)
(74) Vertreter: Fuchs, Franz-Josef, Dr.-Ing.

(56) Entgegenhaltungen:
- EP-A- 0 094 502
- DE-B- 2 304 070
- REVUE DE PHYSIQUE APPLIQUEE Band 18, Nr. 9, September 1983, Seiten 595-610, Orsay, Frankreich; M.T. JANOT-GIORGETTI et al.: "Utilisation d un système de reconnaissance de la parole comme aide à l acquisition orale d une langue étrangère

## Beschreibung

Die Erfindung betrifft ein Sprachübungsgerät zur Sprecherziehung bei Sprach- und/oder Hörgeschädigten, zur Therapie bei Sprach-, Sprech- oder Stimmstörungen sowie zum Fremdsprachenunterricht.

Aus REVUE DE PHYSIQUE APPLIQUEE, Band 18, Nr. 9, September 1983, Seiten 595-610, M.T. Janot-Giorgetti et al. "Utilisation d'un système de reconnaissance de la parole comme aide à l'acquisition orale d'une langue étrangère" ist ein Sprachübungsgerät zum Fremdsprachenunterricht bekannt, das einen Rechner zum Speichern eines Trainingsprogramms enthält. Dieses Programm weist lehrerorientierte bzw. schülerorientierte Programm-Module auf. Der lehrerorientierte Modul ermöglicht die Speicherung von Referenzaussprachemuster und von Wortübungsdateien. Die vom Schüler gesprochenen und über ein Mikrofon aufgenommenen Worte werden im Rechner mit den Referenzmustern verglichen und die entsprechenden Signale bewertet, wobei je nach Bewertungsergebnis unterschiedliche Anzeigen auf dem Bildschirm erscheinen. Diese Anzeigen erschöpfen sich jedoch in den Hinweisen "gut" oder "schlecht - wiederhole".

Aus der DE-B-23 04 070 ist ein Sprachübungsgerät mit einem Mikrofon zur Aufnahme einer von der Kehlkopfschwingung abgeleiteten Schwingung und mit einem weiteren Mikrofon, wobei die Mikrofonsignale über je ein Filter einem Aufzeichnungsgerät zugeführt werden, bekannt. Weiterhin ist in der US-A-33 45 979 ein Gerät zur Spracherziehung, Stimmausbildung und Diagnose von Sprachfehlern beschrieben, das aus einem Mikrofon zur Aufnahme der Körper- bzw. Kehlkopfschwingungen, einem Filter, das die durch die Kehlkopfwand eingeführte Dämpfung kompensieren soll, und einer Kathodenstrahlröhre zur Darstellung der über das Filter zugeführten und vom Mikrofon aufgenommenen Schwingungen besteht. Nachteilig bei diesen bekannten Geräten ist, daß sich die Spracherziehung Tauber oder Schwerhöriger noch als recht schwierig gestaltet, weil es für diese sehr schwer ist, anhand des Vergleichs der aufgezeichneten Kurven die Artikulation so zu verändern, daß der zeitliche Amplitudenverlauf dem eines gesunden Sprechers entspricht. Daran ändert sich im wesentlichen auch dann nichts, wenn gemäß der DE-B-23 04 070 die Mikrofonsignale so beeinflußt werden, daß auf dem Bildschirm der Kathodenstrahlröhre eine einfache geometrische Figur erscheint, da der Vergleich zwischen der von einem gesunden Sprecher erzeugten geometrischen Figur und der von einem kranken Sprecher erzeugten geometrischen Figur relativ schwierig und die in den Bildern enthaltene Information nur mit Hilfe feinerer Analyseverfahren zu erfassen ist.

Bei einem bekannten Sprachaudiometrie-Verfahren (DE-A-23 49 626) werden dem Probanden nacheinander Testwörter vorgesprochen und dieser spricht diese Wörter so in ein Mikrofon, wie er sie verstanden hat. Die Testwörter und die nachgesprochenen Wörter werden gespeichert und einer Sprachanalyse unterworfen, mit der festgestellt wird, wieviele Testwörter der Proband richtig verstanden und richtig nachgesprochen hat. Das Meßergebnis wird als Prozentsatz der richtig erkannten Wörter auf einem Anzeigegerät dargestellt.

Der Erfindung liegt die Aufgabe zugrunde, ein Sprachschulungsgerät zu schaffen, das dem Schüler einen einfachen Vergleich seines gesprochenen Wortes bzw. seiner Stimme mit einem Sprachmuster (exakte Aussprache oder Lehrersprachmuster) ermöglicht, den Schüler ferner motiviert die Vorgabe des Sprachmusters nachzuahmen und ihm schließlich erlaubt, auch allein mit dem Sprachübungsgerät zu arbeiten.

Diese Aufgabe wird nach der Erfindung durch die Merkmale des Patentanspruchs 1 gelöst. Vorteilhafte Weiterbildungen und Ausgestaltungen der Erfindung sind in den Patentansprüchen 2 bis 8 gekennzeichnet.

Das rechnergesteuerte Sprachübungsgerät nach der Erfindung bildet einen intelligenten Sprachtrainer, der den Schüler und Lehrer nicht mehr mit der Anzeige von Symbolen, Ersatzzeichen, Kurven oder Farbbalken auf dem Bildschirm (Monitor) und mit der daran sich anschließenden Zeichenanalyse belastet. Beim erfindungsgemäßen Sprachübungsgerät wird das von dem übenden Schüler über ein Mikrofon in das System gesprochene Wort auf dem Monitor als Schriftbild grafisch groß dargestellt. Der erfindungsgemäße Sprachtrainer ermöglicht eine individuelle und persönliche Schulung, wobei verhindert wird, daß Emotionen durch Beeinflussung zwischen Lehrer und Schüler bzw. zwischen Schülern auftreten.

Der Einsatzbereich des rechnergesteuerten Sprachübungsgerätes umfaßt die Therapie bei
- Stimmstörungen:: Funktionelle Störungen (bedingt durch falsche Technik, Stimmstörungen nach Verletzungen und Operationen),
- Sprachstörungen:: Sprachentwicklungsverzögerungen bei Kindern unterschiedlicher Entwicklung, auch hörbedingt, und Sprachverlust bei Erwachsenen nach Schlaganfall, nach Unfall und nach Tumoroperationen,
- Sprechstörungen:: Undeutliches Sprechen, hervorgerufen z.B. durch zentrale Erkrankungen.

Das Sprachübungsgerät läßt sich ferner vorteilhaft im Fremdsprachenunterricht verwenden. Die simultane Vorgabe des Lehrermusters in Verbindung mit einer beliebig wiederholbaren Kontrollmöglichkeit über Diskette motiviert den Schüler in besonderem Maße, dieses Muster nachzuahmen. Durch die Verwendung des Sprachübungsgerätes in Therapie und Unterricht lassen sich beachtliche Lernerfolge hinsichtlich Intonation, Dynamik und Sprechgeschwindigkeit erzielen. Durch Zusatzbausteine ist es möglich, den Einsatz des rechnergesteuerten Sprachübungsgerätes den jeweiligen Anforderungen anzupassen.

Ziel aller Übungen ist es, ein vorgegebenes Sprachmuster derart nachzuahmen, daß es dem Vorgabemuster akustisch ähnlich wird. Je mehr sich die zwei Sprachmuster akustisch ähneln, desto höher ist der auf dem Bildschirm angezeigte Bewertungsgrad und desto klarer erscheint das nachgesprochene Wort in der Schriftform am Monitor.

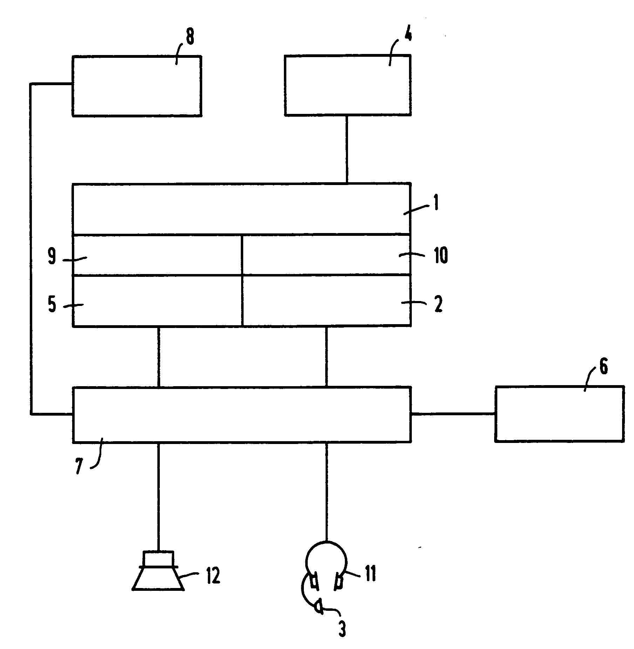

In der Zeichnung ist schematisch ein Blockschaltbild eines Ausführungsbeispieles des erfindungsgemäßen Sprachübungsgerätes dargestellt.

In der Grundausstattung besteht das erfindungsgemäße Sprachübungsgerät aus einem Rechner 1, dessen Speicher ein komplettes Trainingsprogramm umfaßt, welches sich in ein Lehrerprogramm und ein Schülerprogramm unterteilt. Die Lehrerprogrammeinheit wird gebildet aus einer Referenzmusteranlage, aus Wortübungsdateien, aus einer Vergleichereinheit, einer Bewertungseinheit und einem Drucker (Schreiber). Die Schülerprogrammeinheit enthält Schülerparameter und vom Schüler bearbeitete Übungen auf einer Schülerdiskette. Jeder Schüler hat seine eigene Schülerdiskette mit den eigenen Parametern bzw. seinem eigenen Referenzmuster und den von ihm bereits durchgeführten Übungen. Dem mit Floppy 9 und Harddisk 10 ausgestatteten Rechner 1 ist ein Spracherkenner 2 mit Spracherkennungsprogramm zugeordnet. Im Zusammenwirken zwischen dem Rechner und dem Spracherkenner erfolgt im Abgleich zwischen den Sprachmustern von Lehrer und Schüler oder im Abgleich mit einem Referenzmuster und der Nachahmung des Schülers eine Bewertung zwischen richtig und falsch gesprochenen Wörtern.

Arbeiten mit dem Sprachübungsgerät:
Der Lehrer lädt die Schülerdiskette und stellt den zu trainierenden Wortschatz zusammen. Der Schüler beginnt beispielsweise durch Drücken einer Starttaste die Übung. Am Bildschirm erscheint zum Zwecke der Kontrolle seitlich klein das zu sprechende Wort. Der Schüler liest von einer Vorlage die zu übenden Worte ab und spricht in ein Mikrofon 3. Die Mikrofonsignale werden im Spracherkenner 2 verarbeitet und nach Abgleich mit dem Trainingsprogramm des Rechners erfolgt am Bildschirm 4 die Anzeige des erkannten Wortes in großer, grafischer Darstellung, wobei die vom Spracherkenner erkannten Sprachsignale des Schülers in Abhängigkeit vom Bewertungsergebnis in klarer oder in mehr oder weniger verzerrter Schriftform auf dem Bildschirm wiedergegeben werden. Es ist eine Bewertung mit mehreren Abstufungen vorgesehen: Wort klar = optimal erkannt; Wort mehr oder weniger verzerrt = schlechter erkannt; Wort nicht erkannt = als Anzeige erscheint am Bildschirm "nicht korrekt ausgesprochen, bitte wiederholen Sie das Wort ...".

Das Verhältnis der richtig gesprochenen Wörter zu den falsch gesprochenen Wörtern einer Wortdatei (Übung) bildet die Grundlage der Bewertung. Hierbei kann der Notenschlüssel für jeden einzelnen Schüler vom Lehrer vorher festgelegt werden. Damit kann z.B. auch einem am Anfang schwachen Schüler zu einem pädagogisch wichtigen Erfolgserlebnis verholfen werden. Über den Drucker kann jede angelegte Wortdatei und nach jeder Übung die Bewertung ausgedruckt werden.

Wenn der Schüler während der Übung aufgrund einer Selbstkontrolle am Bildschirm feststellt, daß seine Übung noch keinen zufriedenstellenden Bewertungsgrad erreicht hat, so kann er durch Wiederholungen der Übung eine bessere Nachahmung des Musters versuchen. Andererseits hat der Lehrer die Möglichkeit, die Zahl der Wiederholungen durch eine Einstellung am Spracherkenner zu begrenzen.

Nach einer vorteilhaften Weiterbildung wird das Sprachübungsgerät mit einer Sprachausgabeeinheit 5 versehen, die ein Sprachausgabe-Modul mit einem Sprachausgabeprogramm enthält. Der Schüler hat damit die Möglichkeit, das Referenzmuster (Lehrer) wiederholt abzurufen, das dann per Aufruf über Lautsprecher 12 oder Kopfhörer 11 abgegeben wird. Andererseits kann sich der Lehrer, z.B. nach einer vom Schüler allein durchgeführten Übung, die Aussprache des Schülers nach der Übung gezielt anhören. Der Lehrer kann dann für die folgende Übung seines Schülers die erforderlichen Vorbereitungen treffen bzw. die folgende Übung entsprechend gestalten.

Beim Einsatz des Sprachübungsgerätes für Schwerhörige wird das Gerät durch einen Platzverstärker 6 ergänzt. Der Platzverstärker 6 umfaßt vorzugsweise einen Stellereinschub sowie eine Hör-Sprech-Garnitur für Schwerhörige. Durch den Platzverstärker 6 wird in Verbindung mit dem Grundgerät das Signal der Sprachausgabeeinheit 5 so verstärkt, daß mit der beigefügten Hör-Sprech-Garnitur ein maximaler Ausgangsschalldruckpegel erreicht wird. Damit ist dieses Signal auch für Schwerhörige geeignet. Mit einem Stellereinschub kann eine individuelle, dem Hörverlust entsprechende Anpassung für jedes Ohr getrennt vorgenommen werden.

Die Anpassung einer Verstärkereinrichtung an den Gehörschaden des Schülers, die nur von Fachkräften durchgeführt werden kann, erfordert sehr viel Zeit, und deshalb wird ein Schüler, wenn die Verstärkereinrichtung eines Unterrichtsplatzes einmal an seinen Gehörschaden angepaßt ist, immer an demselben Unterrichtsplatz unterrichtet. Ein Wechsel des Unterrichtsplatzes innerhalb derselben schwerhörigen Klasse oder ein Wechsel an einen Unterrichtsplatz in einer anderen Klasse ist deshalb praktisch nicht möglich. Um diese Beschränkung aufzuheben, ist es bei einer Verstärkereinrichtung für ein Schwerhörigenschulungsgerät zur Verstärkung von Mikrofonsignalen mit Einstellgliedern zur Anpassung der akustischen Charakteristik an den Benutzer bekannt, daß die Einstellglieder in einem gesonderten Einschub angeordnet sind, der mittels einer Steckverbindung an den Verstärkerteil anschließbar ist (DE-B-26 05 453).

Gemäß einer weiteren Ausbildung weist das Sprachübungsgerät ein Tonfilter 7 zur Stimmlagenanzeige auf. Durch das Tonfilter 7 sind die Mikrofonsignale des Schülers derart beeinflußbar, daß auf dem Bildschirm 4 eine grafische Darstellung erscheint, derart, daß über die Lehrerprogrammeinheit eine Ton-Mittelfrequenz in Abstimmung mit der Stimmlage des Schülers einstellbar ist, wobei die Schülerparameter auf der Schülerdiskette gespeichert sind. Durch das Filtermodul mit dem zugehörigen Stimmlagenprogramm wird eine Stimmlagenanzeige geschaffen, die es ermöglicht, die Tonlage des Schülers zusammen mit dem gesprochenen Wort am Bildschirm farbig darzustellen. Dabei bildet das Tonfilter 7 aus dem Mikrofonsignal des Schülers eine grafische Darstellung. Durch den Lehrer wird eine mittlere Tonfrequenz am Gerät eingestellt und am Bildschirm kann direkt abgelesen werden, ob die Stimmlage zu hoch oder zu tief ist, wenn die Grafik am Bildschirm oberhalb oder unterhalb der Ton-Mittelfrequenz erscheint. Die einzustellende Ton-Mittelfrequenz wird der Person des Schülers angepaßt und über Parameter auf der Schülerdiskette gespeichert.

Ein weiterer, besonders vorteilhafter Zusatzbaustein zum Sprachübungsgerät besteht aus einem Bildwiedergabegerät, insbesondere einem Diaprojektor 8, zur visuellen Unterstützung des Schülers und zu Wort-Artikelübungen. Der Diaprojektor dient dabei zur visuellen Darstellung der Trainingswörter. Der Schüler kann dabei auch die Zuordnung der Artikel zu den dargestellten Trainingswörtern üben.

## Patentansprüche

1. Sprachübungsgerät zur Sprecherziehung bei Sprach- und/oder Hörgeschädigten, Therapie bei Sprach-, Sprech- oder Stimmstörungen sowie zum Fremdsprachenunterricht, mit einem Rechner (1) zum Speichern eines Trainingsprogramms, wobei der Rechner lehrerorientierte Programmspeicher zur Speicherung von Referenzaussprachemustern und von Wortübungsdateien bzw. schülerorientierte Programmspeicher für das Trainingsprogramm umfaßt, mit einer Vergleichereinheit für die vom Schüler gesprochenen und über ein Mikrofon (3) aufgenommenen Worte mit den Referenzaussprachemustern, mit einer Bewertungseinheit, wobei je nach Bewertungsergebnis unterschiedliche Anzeigen auf einem Bildschirm (4) erscheinen,
**gekennzeichnet dadurch**, daß
Lehrersprachsignale, die als Referenzaussprachemuster auf Diskette, elektronisch od.dgl. gespeichert sind, die Wortübungsdateien, die Vergleichereinheit, die Bewertungseinheit und ein Drucker (Schreiber) die Lehrerprogrammeinheit bilden, und daß eine Schülerdiskette, auf der Schülerparameter und vom Schüler ausgeführte Übungen gespeichert sind, die Schülerprogrammeinheit bildet, und daß ein Spracherkenner (2) vorgesehen ist, der die Referenzaussprachemuster des Lehrers und des Schülers enthält, wobei dem Spracherkenner die vom Schüler nachgesprochenen Sprachsignale über das Mikrofon (3) zugeführt, die Sprachsignale in der Vergleicher- bzw. Bewertungseinheit mit den Referenzaussprachemustern verglichen und im Verhältnis der richtig gesprochenen Worte zu den falsch gesprochenen Worten bewertet werden, und daß auf dem Bildschirm (4) die Anzeige des erkannten Wortes in graphischer Darstellung erfolgt, wobei in Abhängigkeit von der akustischen Ähnlichkeit zum Referenzaussprachemuster eine Anzeige der erkannten Sprachsignale in einer mehr oder weniger verzerrten Schriftform erfolgt und daß, falls die Sprachsignale des Schülers durch den Spracherkenner nicht erkennbar sind, dies am Bildschirm durch Hinweise, wie "nicht korrekt gesprochen, bitte wiederholen", zusammen mit dem nachzusprechenden Wort angezeigt wird.

2. Sprachübungsgerät nach Anspruch 1, **dadurch gekennzeichnet**, daß am Spracherkenner (2) die zur Verbesserung der Wortwiedergabe mögliche Wiederholungszahl einer Sprachübung begrenzbar ist.

3. Sprachübungsgerät nach Anspruch 1, **gekennzeichnet durch** eine Sprachausgabeeinheit (5), mittels der der Schüler zur Kontrolle oder vor der Wiederholung einer Sprachübung das Referenzaussprachemuster oder ein weiteres, in der Sprachausgabeeinheit gespeichertes Sprachmuster (ideale Aussprache) abrufen kann.

4. Sprachübungsgerät nach Anspruch 1 und 3, **dadurch gekennzeichnet**, daß die Sprachausgabeeinheit (5) dem Schüler das alleinige Arbeiten mit dem Sprachübungsgerät und dem Lehrer durch Abhören der Sprachübung des Schülers eine Beurteilung ermöglicht.

5. Sprachübungsgerät nach Anspruch 1 und 3, **dadurch gekennzeichnet**, daß für Schwerhörige zur Signalverstärkung der Sprachausgabeeinheit (5) ein Platzverstärker (6) vorgesehen ist.

6. Sprachübungsgerät nach Anspruch 5, **dadurch gekennzeichnet**, daß dem Platzverstärker (6) Einstellglieder zur Anpassung der akustischen Charakteristik (Vorverstärkung, hohe Frequenzen, tiefe Frequenzen für jedes Ohr getrennt einstellbar) an den Schüler vorgesehen sind und daß die Einstellglieder in einem gesonderten Einschub angeordnet sind, der mittels einer Steckverbindung an den Verstärkerteil anschließbar ist.

7. Sprachübungsgerät nach Anspruch 1, **dadurch gekennzeichnet**, daß ein Tonfilter (7) zur Stimmlagenanzeige vorgesehen ist, wobei durch das Filter die Mikrofonsignale des Schülers so beeinflußbar sind, daß auf dem Bildschirm (4) eine grafische Darstellung erscheint, derart, daß über die Lehrerprogrammeinheit eine Ton-Mittelfrequenz in Abstimmung mit der Stimmlage des Schülers einstellbar ist, wobei die Schülerparameter auf der Schülerdiskette gespeichert sind.

8. Sprachübungsgerät nach Anspruch 1, **dadurch gekennzeichnet**, daß zur visuellen Unterstützung des Schülers für die auszusprechenden Worte und/oder für Artikelübungen ein Bildwiedergabegerät (Diaprojektor 8) zur Anzeige der auszusprechenden Begriffe vorgesehen ist.

## Claims

1. A speech practising apparatus for speech training for the speech and/or hearing impaired, for therapy for speech or voice disorders and for foreign language teaching, comprising a computer (1) for storing a training programme, the computer comprising teacher-orientated programme stores for storing pronunciation reference examples and word exercise data files or pupil-orientated programme stores for the training programme, with a comparison unit for comparing the words spoken by the pupil and recorded via a microphone (3) with the pronunciation reference examples, and with an evaluation unit, different displays appearing on a screen (4) depending on the evaluation result, characterised in that teacher speech signals, which are stored electronically or the like on diskette as pronunciation reference examples, the word exercise data files, the comparison unit, the evaluation unit and a printer form the teacher programme unit, and a pupil diskette, on which the pupil parameters and exercises performed by the pupil are stored, forms the pupil programme unit, and a speech recognition unit (2) is provided, which contains the pronunciation reference examples of the teacher and of the pupil, the speech signals repeated by the pupil being supplied to the speech recognition unit via the microphone (3), the speech signals are compared in the comparison or evaluation unit with the pronunciation reference examples and the ratio of correctly spoken words to incorrectly spoken words is evaluated, and the display of the recognised word is shown graphically on the screen (4), a display of the recognised speech signals being effected in more or less distorted letters as a function of the acoustic similarity to the pronunciation reference example, and in the event of the pupil's speech signals not being recognised by the speech recognition unit, this is indicated on the screen by comments such as "incorrectly pronounced, please repeat", together with the word which is to be repeated.

2. A speech practising apparatus according to claim 1, characterised in that the number of times a speech exercise can be repeated in order to improve the word reproduction is limited in the speech recognition unit (2).

3. A speech practising apparatus according to claim 1, characterised in by a speech transmitting unit (5), by means of which, in order to monitor or repeat a speech exercise, the pupil can call up the pronunciation reference example or a further speech example (ideal pronunciation) stored in the speech transmitting unit.

4. A speech practising apparatus according to claims 1 and 3, characterised in that the speech transmitting unit (5) allows the pupil to work alone with the speech practising apparatus and allows the teacher to make an assessment by listening to the pupil's speech exercise.

5. A speech practising apparatus according to claims 1 and 3, characterised in that a local amplifier (6) is provided for the hearing-impaired in order to amplify the signals of the speech transmitting unit (5).

6. A speech practising apparatus according to claim 5, characterised in that adjustment elements are provided on the local amplifier (6) for adapting the acoustic characteristics (pre-amplification, high frequencies, low frequencies separately adjustable for each ear) to the pupil, and the adjustment elements are arranged in a separate plug, which can be connected by means of a plug connection to the amplifier part.

7. A speech practising apparatus according to claim 1, characterised in that a tone filter (7) is provided for a register display, it being possible to influence the microphone signals of the pupil by the filter in such a manner that a graphic display appears on the screen (4), so that a middle audio-frequency is adjustable via the teacher programme unit as a function of the pupil's register, the pupil parameters being stored on the pupil diskette.

8. A speech practising apparatus according to claim 1, characterised in that an image reproduction device (slide projector 8) is provided for displaying the terms which are to be pronounced in order to visually support the pupil in respect of the words which are to be pronounced and/or for article exercises.

## Revendications

1. Appareil d'exercice vocal pour entraîner des personnes affectées de troubles de la parole et/ou des malentendants à parler, pour l'application d'une thérapie dans le cas de troubles du langage, de l'élocution ou de la voix ainsi que pour l'enseignement de langues étrangères, comportant un ordinateur (1) servant à mémoriser un programme d'entraînement, l'ordinateur comprenant des mémoires de programmes, qui sont destinées au professeur, pour la mémorisation de modèles de prononciation de référence et de fichiers d'exercices de prononciation de mots, ou des mémoires de programmes, qui sont destinées aux élèves, pour le programme d'entraînement, et comportant un comparateur servant à comparer des mots prononcés par l'élève et enregistrés par l'intermédiaire d'un microphone (3), à des modèles de prononciation de référence, et une unité d'évaluation, différents affichages apparaissant sur un écran (4) en fonction du résultat de l'évaluation,
caractérisé par le fait
que des signaux vocaux du professeur, qui sont mémorisés électroniquement ou de façon analogue sur disquettes, en tant que modèles de prononciation de référence, les fichiers d'exercice de prononciation, le comparateur, I'unité d'évaluation et une imprimante (enregistreur) forment l'unité de programme du professeur et qu'une disquette pour l'élève, dans laquelle sont mémorisés des paramètres de l'élève et des exercices exécutés par l'élève, forme une unité de programme pour l'élève, et qu'il est prévu un dispositif de reconnaissance vocale (2), qui contient le modèle de prononciation de référence du professeur et de l'élève, les signaux vocaux prononcés par l'élève étant envoyés par l'intermédiaire du microphone (3) au dispositif de reconnaissance vocale, les signaux vocaux étant comparés dans le comparateur ou dans l'unité d'évaluation, à des modèles de prononciation de référence et la proposition des mots prononcés correctement aux mots prononcés de façon erronée étant évaluée, et que l'affichage du mot identifié s'effectue selon une représentation graphique sur l'écran, un affichage des signaux vocaux identifiés s'effectuant avec une forme d'écriture plus ou moins déformée, en fonction de la similitude acoustique du modèle de prononciation de référence, et que, dans le cas où les signaux vocaux de l'élève ne sont pas identifiables par le dispositif de reconnaissance vocale, ceci est affiché sur l'écran par des indications telles que "prononciation incorrecte, veuillez répéter", conjointement avec le mot devant être répété.

2. Appareil d'exercice vocal suivant la revendication 1, caractérisé par le fait que le nombre de répétitions, qui est possible pour améliorer la reproduction des mots, d'un exercice vocal est susceptible être limité dans le dispositif de reconnaissance vocale (2).

3. Appareil d'exercice vocal suivant la revendication 1, caractérisé par une unité de sortie vocale (5), au moyen de laquelle l'élève peut appeler, à des fins de contrôle ou bien avant la répétition d'un exercice vocal, le modèle de prononciation de référence ou un autre modèle vocal (prononciation idéale) mémorisé dans l'unité de sortie vocale.

4. Appareil d'exercice vocal suivant les revendications 1 et 3, caractérisé par le fait que l'unité de sortie vocale (5) permet à l'élève de travailler seul avec l'appareil d'exercice vocal et au professeur d'effectuer une évaluation en écoutant l'exercice vocal de l'élève.

5. Appareil d'exercice vocal suivant les revendications 1 et 3, caractérisé par le fait que pour des malentendants, un amplificateur de poste (6) est prévu pour amplifier le signal de l'unité de sortie vocale (5).

6. Appareil d'exercice vocal suivant la revendication 5, caractérisé par le fait que des organes de réglage permettant d'adapter la caractéristique acoustique (préamplification, hautes fréquences, basses fréquences pour chaque oreille, réglables séparément) sont prévus dans l'amplificateur de poste (6) à côté de l'élève et que les organes de réglage sont disposés dans un tiroir particulier, qui peut être raccordé à la partie amplificateur par l'intermédiaire d'un connecteur.

7. Appareil d'exercice vocal suivant la revendication 1, caractérisé par le fait qu'il est prévu un filtre acoustique (7) pour l'affichage du registre de la voix, le filtre permettant d'influer sur les signaux du microphone de l'élève de manière qu'une représentation graphique apparaisse sur l'écran (4) de telle sorte qu'à l'aide de l'unité à programme du professeur, on peut régler une fréquence acoustique centrale en accord avec le registre de la voix de l'élève, les paramètres de l'élève étant mémorisés dans la disquette relative à l'élève.

8. Appareil d'exercice vocal suivant la revendication 1, caractérisé par le fait que pour apporter une assistance visuelle à l'élève pour les mots devant être prononcés et/ou pour des exercices sur des articles, il est prévu un appareil de reproduction d'images (projecteur de diapositives 8) pour l'affichage des termes devant être prononcés.
